# EUROPÄISCHE PATENTANMELDUNG

(11) **EP 0 813 905 A2**
(43) Veröffentlichungstag der Anmeldung: **29.12.1997**
(21) Anmeldenummer: 97109184.8
(22) Anmeldetag: 06.06.1997
(51) Int. Cl.: B01J 20/26, B01D 53/26

(54) **Riechstoff-enthaltendes Trockenmittel**

(30) Priorität: 19.06.1996 DE 19624419
(71) Anmelder: HAARMANN & REIMER GMBH, D-37601 Holzminden (DE)
(72) Erfinder: Wrede, Wolfgang, 37603 Holzminden (DE); Kochta, Joachim, Dr., 37603 Holzminden (DE)
(74) Vertreter: Zobel, Manfred, Dr.

(57) **Zusammenfassung**

Die Erfindung betrifft ein Riechstoff-spendendes und feuchtigkeitsaufnehmendes Mittel, das vorzugsweise in Kleiderschränken und ähnlichen Behältnissen, sowie in kleinen Räumen zur Trockenhaltung eingesetzt werden kann.

## Beschreibung

Die Erfindung betrifft ein duftspendendes und Feuchtigkeit aufnehmendes Mittel auf Basis
(A) eines wasserabsorbierenden Polymeren,
(B) eines porösen Trägers für C und
(C) eines Riechstoffs.

Feuchtigkeit in Keller- und anderen Räumen kann zur Schimmelbildung und zu muffigem Geruch führen. In tropischen Regionen mit hoher Luftfeuchtigkeit ist es aber auch wichtig, diese Feuchtigkeit in Kleiderschränken und anderen Behältnissen zu reduzieren, um die besagte Schimmel- und Geruchsbildung zu vermeiden.

Feuchtigkeitsaufnehmende Mittel sind im Prinzip bekannt und auch im Handel erhältlich. Eine Übersicht der bekannten Trockenmittel findet sich zum Beispiel in Römpp (9), 4743 (1992) oder in Kirk-Othmer (3) 8, 115 (1979). Weitere Stoffe dieser Art sind z.B. Calciumchlorid, Silicagel, Natriumsulfat und Natriumcarbonat. Angebotene Marktprodukte dienen üblicherweise zur Anwendung in Kellerräumen. Aus preislichen Gründen wird als aktives Material wasserfreies Calciumchlorid verwendet, das als Trocknungsmittel schon lange bekannt ist.

In der praktischen Anwendung führt die Verwendung von Calciumchlorid dazu, daß das anfangs feste Trockenmittel unter Wasseraufnahme flüssig wird. Dies beginnt zunächst mit der Hydratbildung des Calciumchlorids, das dann weiter Wasser absorbiert und eine gesättigte Lösung bildet. Deshalb muß eine Möglichkeit vorgesehen werden, die Flüssigkeit aufzunehmen.

Übliche Ausführungsformen eines solchen Marktproduktes verwenden deshalb einen zweigeteilten Behälter. Der obere, offene Teil, der der Feuchtigkeitsaufnahme dient, enthält granuliertes Calciumchlorid auf einem siebähnlichen Boden. Das unter dem siebähnlichen Boden liegende Reservoir ist anfangs leer und dient der späteren Flüssigkeitsaufnahme. Wegen der Art des Trockenmittels und der Konstruktion des Trockenmittelbehälters sind solche Ausführungsformen für Räume im Wohnbereich und für die Verwendung in Schränken ungeeignet.

Der vorliegenden Erfindung lag daher die Aufgabe zugrunde, diesen Mangel zu beseitigen und ein Produkt zur Verfügung zu stellen, das sowohl in bewohnten Räumen als auch in Schränken, vorzugsweise in Kleiderschränken, aber auch in anderen Behältnissen sicher und völlig ungefährlich verwendet werden kann. Außerdem sollten Riechstoffe ohne technischen Aufwand einarbeitbar sein.

Es wurde nun gefunden, daß ein System, das einerseits mindestens ein wasserabsorbierendes Polymer und andererseits einen Riechstoff auf Natriumsulfat enthält, diese Forderungen überraschend gut erfüllt.

Gegenstand der Erfindung ist also ein Riechstoff-enthaltendes Trockenmittel auf Basis von
(A) wasserabsorbierendem Polymer mit einem bei 30°C und 80 % relativer Luftfeuchtigkeit in 30 Tagen bestimmten Wasserdampfaufnahmevermögen von mindestens 650, vorzugsweise 1 300 bis 2 000 g/kg A,
(B) wasserfreiem Natriumsulfat und
(C) Riechstoff.

Die wasserabsorbierenden Polymeren sind bekannt. Sie können linear sein, sind aber vorzugsweise vernetzt. Im allgemeinen handelt es sich um Polymerisate aus wasserlöslichen ethylenisch ungesättigten Verbindungen und polyethylenisch ungesättigten Vernetzern. Die ethylenisch ungesättigten Monomeren können nichtionisch, anionisch oder kationisch sein. Im Falle ionischer Monomerer kann man auch Mischungen ionischer und nichtionischer Monomerer einsetzen, wobei der Anteil nichtionischer Monomerer in der Regel 0 bis 90, vorzugsweise 0 bis 70 Gew.-%, bezogen auf die Summe der zu polymerisierenden Ausgangsverbindungen, beträgt. Beispiele nichtionischer Monomerer sind Vinylpyrrolidon, Methacrylamid und - vorzugsweise - Acrylamid. Beispiele anionischer Monomerer sind Sulfonsäurederivate wie Allylsulfonat und 2-Acrylamido-2-methyl-propansulfonat, Carbonsäuren und ihre Derivate wie Methacrylsäure, Maleinsäure, Itaconsäure, Crotonsäure und - vorzugsweise - Acrylsäure. Beispiele kationischer Monomerer umfassen Dialkylaminoalkyl(meth)acrylate und -acrylamide, gewöhnlich als Säureaddukt oder quaternäres Salz, wie z.B. Dimethylaminomethyl(meth)acrylat und Dimethylaminopropyl(meth)acrylamid.

Bevorzugte Polymere A umfassen beispielsweise Pfropfpolymerisate von Acrylnitril oder Acrylsäure auf hydrolysierte Stärke (US 3 661 815 und 4 076 663), verseifte Vinylacetat/Acrylester-Copolymerisate (JP-A Sho 52-14 689), hydrolysierte Acrylnitril- oder Acrylamid-Copolymerisate (JP-A Sho 53-15 959) und deren Vernetzungsprodukte, teilneutralisierte gegebenenfalls vernetzte Polyacrylsäure (JP-A Sho 57-34 101), durch Kieselsäure oder Silikate vernetzte wasserquellbare Säuren wie Polyacrylsäure (WO 93/17 066), intern veresterte Copolymerisate aus Carboxylgruppen-haltigen ungesättigten Monomeren und Hydroxyalkylestergruppen-haltigen ungesättigten Monomeren (US 52 80 079), vernetzte Carboxylgruppen-haltige Polymerisate, z.B. mit Trimethylolpropan-trisacrylat vernetzte Polyacrylsäure, gegebenenfalls in Gegenwart eines hydrophilen organischen Lösungsmittels wie Glycerin (EP-A 450 922), Carboxylgruppen-haltige Polymerisate, die zu 50 bis 99 Mol.-% neutralisiert sind, enthaltend pro 100 Gewichtsteile dieser Polymerisate zusätzlich
a) 0,001 bis 5 Gewichtsteile N-Hydroxyalkyl-β-(meth)alaninester und/oder
b) 0,001 bis 5 Gewichtsteile Polykondensationsprodukte von a) in
c) 0,1 bis 5 Gewichtsteile Wasser und
d) 0,2 bis 10 Gewichtsteile eines wassermischbaren organischen Verdünnungsmittels (DE-OS 41 16 428),

Zusammensetzungen aus 70 bis 99,9 Gew.-% gegebenenfalls vernetzten wasserlöslichen und/oder wasserquellbaren Polymeren auf Basis von Polysacchariden oder deren Derivaten und 0,1 bis 30 Gew.-% gegebenenfalls vernetzten wasserquellbaren synthetischen Polymerisaten aus (Meth-)Acrylsäure, (Meth-)Acrylnitril, (Meth-)Acrylamid, Vinylacetat, Vinylpyrrolidon, Vinylpyridin, Maleinsäure(anhydrid), Itaconsäure(anhydrid), Fumarsäure, Vinylsulfonsäure, 2-Acrylamido-2-methylpropansulfonsäure sowie den Amiden, den N-Alkylderivaten, den N,N'-Dialkylderivaten, den hydroxylgruppenhaltigen Estern und den aminogruppenhaltigen Estern dieser polymerisierbaren Säuren, wobei vorzugsweise 2 bis 98 Mol-% der Säuregruppen dieser Säuren neutralisiert sind, sowie 0,1 bis 30 Gew.-%, bezogen auf diese polymeren Komponenten, eines Materials mit einem Schmelz- oder Erweichungspunkt unterhalb von 180°C zur Verhinderung der Entmischung und des Gelblocking, gegebenenfalls 0,001 bis 10 Gew.-%, bezogen auf die polymeren Komponenten eines Vernetzers und gegebenenfalls bis zu 50 Gew.-%, bezogen auf die polymeren Komponenten, eines Antiblockingmittels auf Basis von Fasern oder Materialien mit großer Oberfläche (DE-OS 42 06 856) und/oder mit 0,1 bis 50 Gew.-%, bezogen auf die polymeren Komponenten, eines Reaktivzusatzes zur Verbesserung der Aufnahmekapazität und -geschwindigkeit der polymeren Zusammensetzung (DE-OS 42 06 857).

Sofern die Polymeren A freie oder (teil)neutralisierte Säuregruppen enthalten, beträgt der bevorzugte Gehalt mindestens 0,2 Äquivalente freie und/oder neutralisierte Säuregruppen pro 100 g Polymer A.

Die Polymeren A besitzen im allgemeinen als Zahlenmittel bestimmte Molekulargewichte von 3 000 bis 1 000 000, vorzugsweise von 10 000 bis 500 000.

Die Polymeren A wurden bislang hauptsächlich zur Wasseraufnahme in Windeln und in Artikeln der weiblichen Hygiene eingesetzt. Überraschenderweise wurde gefunden, daß diese Polymeren, die eigentlich gar nicht zur Wasserdampfaufnahme bestimmt sind, gegenüber anorganischen Substanzen wie konzentrierte Schwefelsäure, Phosphorpentoxid oder Calciumchlorid, Vorteile aufweisen. So zeigen sie eine hervorragende, lineare Luftfeuchtigkeitsaufnahme, die ein Mehrfaches der Aufnahme der anorganischen Substanzen erreicht. Diese Absorber sind in jeder Beziehung sicher; auch bei nicht sachgemäßer Anwendung des erfindungsgemäßen Beduftungs- und Trockenmittels verursachen sie keinerlei Probleme. Ein Nachteil dieser Absorber ist aber ihre Empfindlichkeit gegenüber weiteren Additiven, die den Vorgang der Feuchtigkeitsaufnahmefähigkeit signifikant verändern können. Zum Beispiel würden aufgesprühte Duftstoffe die Feuchtigkeitsaufnahme unerwünscht reduzieren oder gar verhindern.

Da die erfindungsgemäßen Trockenmittel auch Duftstoffe enthalten sollen, mußte ein Weg gefunden werden, eine ausreichende Menge Duftstoffe einzubringen. Insbesondere sollte ein Träger gefunden werden, der die Duftstoffe aufnehmen konnte, ohne die Wasseraufnahme der polymeren Absorber zu reduzieren. Des weiteren war es wünschenswert, die Duftstoffe ohne Sprühtechnik durch einfaches Mischen aufzubringen.

Es hat sich gezeigt, daß anorganische Träger diese Funktion am besten erfüllen. Bevorzugter Träger B ist Natriumsulfat.

Der bevorzugte Träger B ist sprühgetrocknetes Natriumsulfat. Durch den Sprühprozess werden neben kleinen sphärischen Hohlkörpern mikrokristalline Strukturen gebildet, die bedeutende Mengen an organischer Flüssigkeit, wie z.B. Riechstoffe, aufnehmen können. Üblicherweise liegt die Schüttdichte eines solchen Natriumsulfates bei etwa 450 g/l; der Teilchendurchmesser kann zwischen 0,05 mm und 0,5 mm liegen, im allgemeinen aber überwiegend im Bereich um 0,25 mm. Dieses Natriumsulfat kann ohne zu verkleben, etwa 15 Gew.-% Parfüm aufnehmen; auf der anderen Seite trägt es zur Wasseraufnahme bei, da es nach dem Sprühtrocknen kein oder nur sehr wenig Kristallwasser enthält. Im Zuge der Feuchtigkeitsaufnahme wird die Struktur des Natriumsulfates durch Kristallwasser verändert und dadurch auch letzte Reste von Riechstoffen in einem feuchtigkeitskontrollierten Zeitraum freigesetzt.

Wenn man von einer Anwendungsdauer von etwa 3 Monaten ausgeht, dann werden nach vorliegenden Erfahrungswerten etwa 5 bis 10 mg Riechstoffe pro Tag verdampfen, mithin müßten also gesamt 0,5 bis 1,0 g Riechstoffe appliziert werden.

Die Riechstoffe können traditioneller Art sein, aber auch Riechstoffe mit Repellentwirkung für Insekten enthalten, z.B. Lavendel. Daneben können die erfindungsgemäßen Trockenmittel auch Insektizide, wie z.B. Permethrin, enthalten.

Die erfindungsgemäßen Mittel enthalten die Komponente A in Mengen von 1 bis 99, vorzugsweise 40 bis 90 Gewichtsteilen, die Komponente B in Mengen von 1 bis 60, vorzugsweise 30 bis 50 Gewichtsteilen und die Komponente C in Mengen von 0,5 bis 5, vorzugsweise 0,5 bis 2 Gewichtsteilen.

Eine geeignete Ausführungsform könnte folgende Zusammensetzung besitzen:
(1)
   - 90 %: Absorber
   - 9 %: Natriumsulfat
   - 1 %: Riechstoffe

Eine preiswertere Ausführungsform hatte folgende Zusammensetzung
(2)
   - 50 %: Absorber
   - 49 %: Natriumsulfat
   - 1 %: Riechstoffe

Die Herstellung des freifließenden Pulvers erfolgt durch vorheriges Mischen der Duftstoffe mit dem Sulfat, das wiederum dem Absorber in einem einfachen Mischer zugemischt wurde.

Durch die Feuchtigkeitsaufnahme kommt es zu einer Volumenexpansion. Der Behälter für die erfindungsgemäße Rezeptur muß deshalb so dimensioniert sein, daß das expandierte Volumen aufgenommen werden kann. Das kann dadurch geschehen, daß der vorgesehene Behälter nur teilweise mit der erfindungsgemäßen Komposition gefüllt wird oder aber die Wandungen des Behältnisses ausreichend flexibel gestaltet sind, z.B. mittels elastischer, perforierter Folie.

### Beispiele

Zur Prüfung der wasseraufnehmenden Eigenschaften wurden jeweils 30 g der feuchtigkeitsaufnehmenden Substanzen, im folgenden Absorber genannt, in einer geschlossenen Kammer, wie sie üblicherweise für Dünnschichtchromatographie verwendet wird, über einer ausreichenden Menge Wasser bei Raumtemperatur gelagert. Anfangs wurde die Wasseraufnahme, gemessen als Gewichtszunahme, täglich, später wöchentlich bestimmt. Die jeweils verwendeten Absorber wurden vor Testbeginn einheitlich zur Gewichtskonstanz getrocknet.

### Vergleich/Beispiel

| Wasseraufnahme in [g] | | | | | |
|---|---|---|---|---|---|
| | nach 1 | 3 | 10 | 30 | 45 Tagen |
| Calciumchlorid | 7 | 20 | 35 | 35 | 35 |
| Natriumcarbonat | 1 | 3 | 7 | 10 | 10 |
| Polymerabsorber | 1 | 5 | 16 | 35 | 43 |
| erfindungsgemäßes System* | 4 | 10 | 25 | 47 | 56 |

| | | | | | |
|---|---|---|---|---|---|
| * 50 Gew.-% Polymerabsorber, ®SALSORB CL10 oder Produkt T 5319/99∗ der Chem. Fabrik Stockhausen, Krefeld, vernetzte Polyacrylsäure in der Na-Form der Firma Allied Colloids GmbH, Hamburg, 49 Gew.-% sprühgetrocknetes Natriumsulfat und 1 Gew.-% Riechstoff | | | | | |

Diese Daten belegen die überragenden Eigenschaften einer erfindungsgemäßen Präparation im Vergleich zu den eingangs erwähnten Salzen. Die Feuchtigkeitsaufnahme ist ohne Frage langsamer, aber über einen längeren Zeitraum kontinuierlich und deutlich höher.

## Patentansprüche

1. Riechstoff enthaltendes Trockenmittel auf Basis von
(A) wasserabsorbierendem Polymer mit einem bei 30°C und 80 % relativer Luftfeuchtigkeit in 30 Tagen bestimmten Wasserdampfaufnahmevermögen von mindestens 650 g/kg A,
(B) wasserfreiem Natriumsulfat und
(C) Riechstoff.

2. Trockenmittel nach Anspruch 1, wonach sprühgetrocknetes Natriumsulfat als Komponente B eingesetzt wird.

3. Trockenmittel nach Anspruch 1, wonach Komponente B der Träger für Komponente C ist.

4. Trockenmittel nach Anspruch 1 enthaltend
1 bis 99 Gewichtsteile A,
1 bis 60 Gewichtsteile B und
0,5 bis 5 Gewichtsteile C.
